# FASCICULE DE BREVET EUROPEEN

(11) **EP 3 222 025 B1**
(45) Date de publication et mention de la délivrance du brevet: **02.09.2020**
(21) Numéro de dépôt: 15816488.9
(22) Date de dépôt: 18.11.2015
(51) Int. Cl.: H04L 29/06, H04W 12/06, H04W 12/00

(54) **PROCÉDÉ DE CONTRÔLE D'ACCÈS A UN SYSTÈME DE PRODUCTION D'UN SYSTÈME INFORMATIQUE NON CONNECTÉ À UN SYSTÈME D'INFORMATION DUDIT SYSTÈME INFORMATIQUE**
VERFAHREN ZUR STEUERUNG DES ZUGRIFFS AUF EIN PRODUKTIONSSYSTEM EINES COMPUTERSYSTEMS OHNE ANSCHLUSS AN EIN INFORMATIONSSYSTEM DES BESAGTEN COMPUTERSYSTEMS
METHOD FOR CONTROLLING ACCESS TO A PRODUCTION SYSTEM OF A COMPUTER SYSTEM NOT CONNECTED TO AN INFORMATION SYSTEM OF SAID COMPUTER SYSTEM

(30) Priorité: 21.11.2014 FR 1461319
(43) Date de publication de la demande: 27.09.2017
(73) Titulaire: Evidian, 78340 Les Clayes Sous Bois (FR)
(72) Inventeur: GUIONNEAU, Christophe, 38000 Grenoble (FR); COSSARD, David, 95490 Vaureal (FR); DEDIEU, Gérard, 78180 Montigny le Bretonneux (FR)
(74) Mandataire: A.P.I. Conseil
(86) Numéro de dépôt international: PCT/FR2015/053121
(87) Numéro de publication internationale: WO 2016/079429

(56) Documents cités:
- WO-A1-2010/116109
- FR-A1- 2 984 047

## Description

### [Domaine de l'invention]

L'invention concerne un procédé de contrôle d'accès à un système de production (SIP) d'un système informatique, non connecté à un système d'information (SIC) du système informatique.

Le procédé concerne plus particulièrement un procédé de contrôle d'accès à des applications du système de production afin d'empêcher des accès audit système par des utilisateurs non autorisés.

On entend ici par système informatique, un réseau informatique d'une entreprise comprenant un système d'information central (SIC), et un système de production (SIP).

On entend par système d'information central (SIC), un réseau informatique qui comporte des applications comprenant les données d'identification des utilisateurs du réseau et/ou du personnel de l'entreprise. Le système d'information central, dénommé dans la suite, système d'information (SIC), comporte un dispositif de contrôle d'accès et d'identification des utilisateurs mettant en œuvre un mécanisme d'authentification se présentant sous forme d'un programme et de données installés sur un serveur dénommé serveur d'authentification.

On entend par système de production (SIP), un réseau informatique comportant des applications critiques pour l'entreprise à savoir des applications devant être protégées vis-à-vis de l'extérieur mais aussi vis-à-vis d'une partie des utilisateurs du réseau non autorisés. Le contrôle d'accès à ces applications est fait par le système d'information (SIC) du système de production (SIP). Chaque utilisateur est authentifié et les accès sont accordés en fonction de son identité, chaque opération est vérifiée pour déterminer à postériori les actions réalisées par les utilisateurs en cas de tentative d'utilisation abusive des applications.

On entend par contrôle d'accès, le contrôle d'accès et des identités des utilisateurs.

On comprend ainsi qu'il est nécessaire de mettre place, des mécanismes d'authentification suffisamment robustes pour certifier que l'utilisateur authentifié n'est pas une identité usurpée.

Ce besoin se fait sentir tout particulièrement, lorsque les applications du système de production sont des applications provenant de système de contrôle et d'acquisition de données telles que des applications de type « SCADA » Supervisory Control And Data Acquisition. C'est le cas par exemple pour les applications qui permettent de traiter à grande échelle et en temps réel un grand nombre de télémesures et de contrôler à distance des installations techniques comme des installations de production ou de distribution d'énergie.

Ainsi, non seulement un contrôle d'accès est requis pour de telles applications mais en plus ce contrôle doit être rigoureux et disposer de mécanismes d'authentification s'assurant de l'identité des utilisateurs.

### Problème technique

L'authentification des utilisateurs doit être réalisée au niveau des applications du système de production ou lors de l'accès au réseau et aux équipements informatiques, poste de travail, portail applicatif des applications, ou équivalent, dans le réseau du système de production. Mais ces authentifications, ne peuvent pas être contrôlées par les dispositifs de sécurité et d'authentification du système d'information de l'entreprise dans un autre réseau non-connecté avec le réseau de production.

Les procédés de gestion des accès et des identités des utilisateurs déjà existants dans le système d'information de l'entreprise ne peuvent pas réaliser les mêmes fonctions dans le système de production qui est physiquement isolé.

Il est donc nécessaire que les authentifications réalisées pour accéder au système de production soient contrôlées, vérifiées et autorisées par le système d'information. Il est néanmoins primordial de respecter l'étanchéité stricte des réseaux sans rajouter de connexion entre le système de production et l'extérieur. De plus les méthodes d'authentification utilisées pour accéder au réseau de production doivent respecter les standards de sécurité actuel, authentification forte et authentification multi-facteurs, plus robuste que de simples mots de passe.

Par ailleurs, les authentifications opérées pour le système de production doivent répondre aux caractéristiques suivantes :
- S'appliquer aux applications de type Web ou portail applicatif Web.
- Permettre de s'authentifier sur les postes de travail de type Windows pour accéder aux applications de type client-lourd (c'est-à-dire les postes de travail sur les quels sont installées des applications).
- Proposer une authentification robuste multi-facteurs.
- Etre contrôlées par un système d'information disjoint c'est-à-dire non connecté au réseau du système de production.

### [Art antérieur]

La plupart des solutions connues consistent en la duplication des mécanismes de gestion des accès et des identités des utilisateurs dans le système de production. Le système de production possède donc ces propres mécanismes d'authentification qui peuvent s'appliquer à la gestion des accès aux applications et aux poste de travail, les données résultat générées peuvent être « remontés » au système d'information au travers d'une connexion de type diode (unidirectionnelle), mais les mécanismes d'authentifications sont déconnectés du système d'information (SIC). Les données résultat sont remontées de manière asynchrone sur une base quotidienne, la connexion utilisée n'est pas permanente et ne peut pas être utilisée pour échanger des informations synchrones en temps réel.

Les mécanismes actuels de gestion d'authentification de type One Time Password (mot de passe à usage unique), ou système de jeton HOTP/TOTP (HMAC-based One-time Password / Time-based One-time Password), reposent sur l'utilisation d'un serveur qui est nécessairement couplé au système informatique qui vérifie l'authentification.

Les mécanismes d'authentification de type HOTP/TOTP, reposent sur le principe d'un serveur d'authentification dans lequel les identifications des utilisateurs sont enregistrées et des clés sont synchronisées avec l'application génératrice de mot de passe, le plus souvent sous la forme d'une application pour téléphone mobile. L'application du téléphone mobile génère un mot de passe à usage unique qui est vérifié par le serveur sur la base des données associées et synchronisées avec chaque utilisateur. Si ce serveur est hébergé dans le système d'information (SIC), le principe de cloisonnement est rompu.

On pourra se reporter également au document WO2010/116109 considéré comme l'état de la technique le plus proche. Cependant le procédé de contrôle décrit dans ce document n'apporte pas de réponse à l'amélioration de l'authentification des utilisateurs tout en assurant une augmentation de la sécurité.

Le procédé de contrôle d'accès proposé selon l'invention permet de résoudre ce problème.

A cette fin, il est proposé selon l'invention, un procédé de contrôle d'accès permettant d'appliquer les mêmes principes de contrôle des accès et des identités aux systèmes de production sous le contrôle du système d'information de l'entreprise afin d'obtenir une gestion unique des accès et des identités tout en conservant le cloisonnement, c'est-à-dire la non connexion entre le système de production et le système d'information.

Le procédé proposé apporte une simplification au contrôle d'accès aux applications des systèmes de production non connectés (au système d'information) et une sécurité accrue par rapport aux solutions de l'art antérieur.

La simplification résulte de l'utilisation du mécanisme d'authentification et des données relatives aux utilisateurs du système d'information (SIC) sans la nécessité de dupliquer ce mécanisme et les données sur le système de production (SIP),et de l'enregistrement de clés privées chiffrées pour les utilisateurs sur le système d'information, leur permettant après authentification de les obtenir et de les déchiffrer afin de décoder un défi se présentant sous forme de code de chiffrement image, généré par le système de production (SIP) lors d'une demande d'accès d'un utilisateur. Lesdits codes de chiffrement image sont récupérés par les terminaux des utilisateurs demandant un accès.

L'invention a plus particulièrement pour objet un procédé (M) de contrôle d'accès à un système de production (SIP) d'un système informatique par un utilisateur identifié auprès dudit système de production (SIP), le système de production étant non connecté à un système d'information (SIC) dudit système informatique, le système d'information (SIC) comprenant des moyens d'authentification, le procédé étant principalement caractérisé en ce qu'il comprend les étapes suivantes:
**A)** Une phase initiale d'enrôlement d'un utilisateur dans le système informatique de production (SIP) au moyen d'un terminal (1) comprenant:
   - a) la fourniture au terminal de l'utilisateur d'une clé privée chiffrée (Cph) associée à chaque compte de l'utilisateur dans le système de production (SIP),
   - b) la transmission par le terminal (1) de la clé privée chiffrée (Cph) contenant une clé privée (kpv) et l'enregistrement par le système d'information (SIC) de ladite clé privée chiffrée (Cph).
**B)** Puis, pour chaque demande d'accès au système de production (SIP) par l'utilisateur, au moyen d'un poste (P) connecté au système de production, une phase d'authentification par le système de production (SIP) comprenant:
   - la récupération par le terminal (1) de l'utilisateur d'un code de chiffrement image (QRCb) affiché sur ledit poste (P), comprenant une donnée chiffrée (Cph) associée au compte de l'utilisateur et déchiffrable au moyen de la clé privée (kpv) associée et enregistrée sous forme chiffrée sur le système d'information (SIC),
   - La connexion du terminal (1) au système informatique d'information (SIC) et l'authentification de l'utilisateur par ledit système d'information (SIC),
   - La transmission par ledit système (SIC) au terminal (1) de l'utilisateur, de la clé privée chiffrée (Cph)) enregistrée pour le compte utilisateur,
   - Le déchiffrement par le terminal (1) de la clé privée chiffrée (Cph) avec une clé secrète (ks) afin d'obtenir la clé privée (kpv) permettant de déchiffrer le code de chiffrement image récupéré par le terminal (1) et obtenir le mot de passe (MDP) autorisant l'accès au compte utilisateur du système de production.

Selon une autre caractéristique,- la fourniture au terminal (1) de l'utilisateur d'une clé privée chiffrée associée à chaque compte de l'utilisateur dans le système de production (SIP) comporte :
- une authentification de l'utilisateur par le système de production,
- la génération par ledit système de production (SIP) d'un premier code de chiffrement image (QCR1) contenant une donnée chiffrée (Cph) avec une clé publique (Kpu) et d'un deuxième code de chiffrement image (QCR2) contenant la clé privée (Kpv),
- et la récupération dudit code par le terminal (1) ;
- le décodage du code de chiffrement (QCR2) pour obtenir la clé privée (kpv),
- le déchiffrement de la donnée chiffrée avec la clé privée (Kpv).

Selon une autre caractéristique, la phase A) comprend en outre les étapes de:
- chiffrement par le terminal de ladite la clé privée (kpv) par une clé secrète (ks),
- connexion au système d'information (SIC) et authentification par le système d'information (SIC) dudit terminal.

Avantageusement, la clé secrète de chiffrement (ks) est enregistrée dans le terminal et est obtenue à partir d'un identifiant unique du terminal (1) ou lors de la phase A) ou générée aléatoirement par le terminal ou générée par le terminal à partir d'une phrase secrète « pass-phrase » communiquée par l'utilisateur.

Selon une autre caractéristique, la phase B) comprend l'étape initiale d'entrée d'une donnée d'identification ID de l'utilisateur sur un poste (P) connecté au système de production (SIP).

Avantageusement, l'enrôlement du terminal (1) d'un utilisateur au système informatique de production (SIP) comprend une étape initiale:
- d'authentification de l'utilisateur au moyen d'un identifiant (ID) enregistré dans le système de production (SIP).

Selon une autre caractéristique, la connexion au système d'information (SIC) et l'authentification par le système d'information (SIC) dudit terminal comprend :
Lors de l'étape d'enrôlement,
   - L'identification de l'utilisateur du terminal par un identifiant (ID) et l'enregistrement de cet identifiant sur le système d'information (SIC),
Puis lors de connexions ultérieures :
   - La vérification de l'identifiant (ID) reçu par le système d'information (SIC) et l'identifiant (ID) enregistré pour cet utilisateur.

Avantageusement, la connexion au système d'information (SIC) par le terminal de l'utilisateur et l'authentification par ledit système d'information (SIC) sont réalisées par un protocole sécurisé (3) mis en œuvre par une application (2) enregistrée sur le terminal.

Le terminal (1) est un terminal équipé de moyens optiques de capture d'image tel qu'un téléphone mobile ou une tablette portable et/ou d'une connexion pour communication sans-fil à courte portée et haute fréquence. Avantageusement, une telle communication sans fil courte portée est réalisée par Bluetooth ou NFC (Near Field Communication).

Selon une autre caractéristique, les clés privées chiffrées associés à chaque compte de l'utilisateur dans le système de production (SIP) sont sous forme de codes de chiffrement image (QRC1 et QRC2) composés:
D'un QR-Code ; ou
D'un datamatrix ;
D'un code barre.

Avantageusement, la connexion au poste (P) de l'utilisateur comprend :
- une connexion via ledit poste au système de production (SIP) ou à une application WEB ou à un portail WEB du système de production,
- la saisie par l'utilisateur de l'identifiant (ID) sur le poste (P),
- la génération et l'affichage du code de chiffrement (QRC2) sur l'écran dudit poste (P) ou dans une bannière d'authentification de l'application WEB ou du portail applicatif.

Avantageusement, la connexion au système d'information (SIC) comprend une connexion de type WEBService ou REST sur un protocole HTTPS.

Selon une autre caractéristique, la connexion est sécurisée au moyen d'un certificat du serveur d'authentification du système d'information, le terminal de l'utilisateur ayant ledit certificat ou ayant un certificat de l'autorité de certification du certificat.

L'invention a également pour objet un terminal (1) adapté pour récupérer des codes de chiffrement image (QCR1, QCR2, QRCb), le terminal comprenant un processeur (PR) permettant de décoder lesdits codes de chiffrement image et obtenir la clé privée (kpv), chiffrer la clé privée au moyen d'une clé secrète (ks) transmise par le système de production (SIP) ou générée par ledit processeur du terminal (1), le terminal (1) étant également apte à se connecter à un système d'information (SIC), à mettre en œuvre un mode d'authentification avec ledit système d'information (SIC) et à transmettre pour enregistrement, la clé privée chiffrée (Cph) relative au compte utilisateur du terminal.

La clé secrète générée par le processeur du terminal peut être générée par un générateur aléatoire du processeur et être ainsi une donnée purement aléatoire ou être générée par ledit processeur à partir d'une phrase secrète «pass-phrase» communiquée par l'utilisateur à son téléphone mobile.

Selon une autre caractéristique, le terminal (1) comporte une application (2) pilotée par le processeur (PR), apte à mettre en œuvre un mode d'authentification avec un système d'information (SIC) via une liaison sécurisée, les identifications (ID) des utilisateurs et le mode d'authentification (MP ou CERT) étant enregistrés sur le système d'information (SIC).

Avantageusement, l'application (2) pilotée par le processeur du terminal (1) émet une demande de phrase secrète « pass-phrase » à l'utilisateur lors de la génération de la clé secrète (ks) et ensuite avant toute utilisation par le terminal.

Selon une autre caractéristique, l'application (2) d terminal est apte à déchiffrer la clé privée chiffrée (Cph) fournie par le système d'information (SIC), lorsque cette clé privée chiffrée correspond à la clé chiffrée avec la clé secrète (ks) associée au compte utilisateur qu'il possède.

L'invention a également pour objet un système pour le contrôle d'accès à un système de production (SIP) non connecté à un système d'information (SIC) d'un système informatique, principalement caractérisé en ce qu'il comprend :
- un terminal selon les revendications 13 à 15,
- en ce que le système de production (SIP) comporte en mémoire des identifiants des comptes utilisateurs, et les clés publiques (kpu) et privées (kpv) associées à chaque utilisateur et est apte à chiffrer une clé privée (kpv) au moyen de la clé publique (kpu) associée et à générer un code de chiffrement image (QRC2) comprenant ladite clé privée
- et en ce que le système d'information (SIC) comporte un serveur (S) comportant une base d'authentification ou est relié à un serveur d'authentification.

D'autres particularités et avantages apparaitront à la lecture de la description suivante faite à titre illustratif et non limitatif, en référence aux figures annexées qui représentent:
- La figure 1, un schéma d'un système de mise en œuvre du procédé selon l'invention

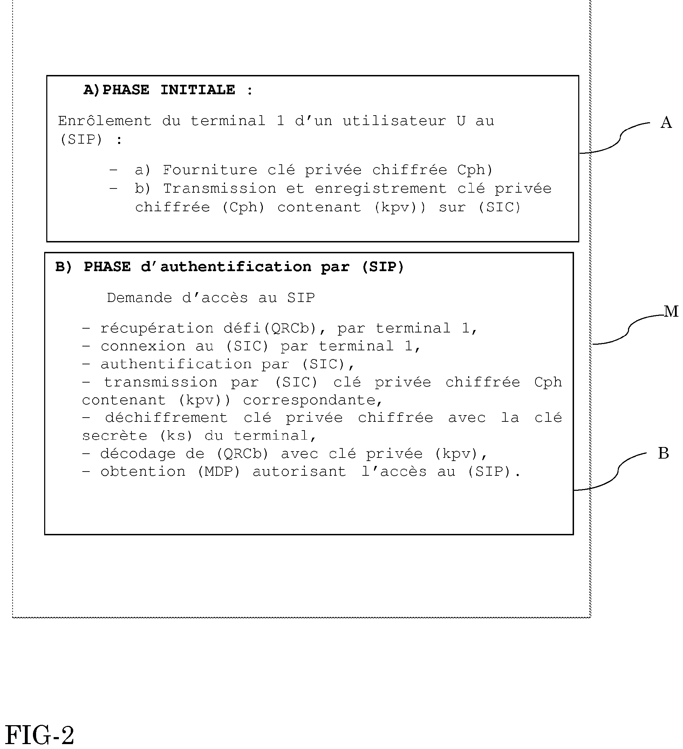

- La figure 2, un schéma des deux phases principales A) et B) du procédé selon l'invention,

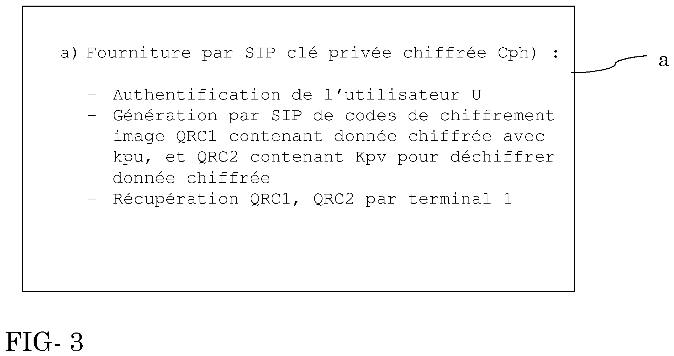

- La figure 3, un schéma détaillé de l'étape a),

### [Description détaillée de l'invention]

L'invention concerne un procédé de contrôle d'accès à un système de production (SIP) d'un système informatique non connecté à un système d'information (SIC) ledit procédé comportant - A)une phase initiale d'enrôlement d'un utilisateur au moyen d'un terminal (1) dans le système de production (SIP), comprenant - a) la fourniture d'une clé privée chiffrée (Cph) associée à chaque compte de l'utilisateur dans le système de production (SIP),- b) la transmission par le terminal (1) de la clé privée chiffrée (Cph) au système d'information (SIC) et l'enregistrement par ledit système (SIC) de la clé privée chiffrée (Cph) - B) pour chaque demande d'accès au système de production (SIP), une phase d'authentification par le système de production (SIP) comprenant - la récupération par le terminal (1) de l'utilisateur d'un défi (QRCb) généré par le système de production, que seule la clé chiffrée stockée sur le système d'information (SIC) permet de résoudre, cette clé ne pouvant être obtenue qu'après authentification du terminal par le système d'information (SIC).

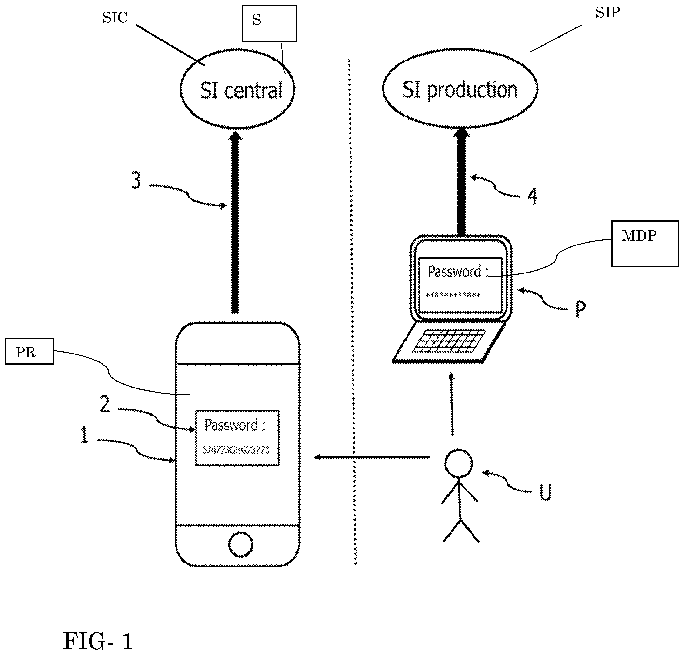

La figure 1 est le schéma d'un système de mise en œuvre du procédé selon l'invention. Le système comprend, un système de production SIP, un système d'information SIC, un terminal utilisateur 1, un poste utilisateur P relié au réseau informatique du système de production SIP. Les systèmes d'information SIC et de production SIP sont disjoints c'est-à-dire non connectés.

Dans l'exemple de réalisation décrit ci-après, le terminal est un téléphone mobile 1 comportant l'application 2 pilotée par un processeur PR. Le système d'information SIC comporte un serveur S et le système de production SIP comporte le poste P et des applications accessibles sur le poste P ou sur le WEB ou sur un portail applicatif WEB.

### A) Phase d'enrôlement de l'application 2 du téléphone dans le système de production SIP.

Cette phase permet de générer des mots de passe à usage unique MDP permettant à un utilisateur authentifié par le système d'information SIC, d'accéder au système de production. L'identifiant du téléphone est enregistré sur les serveurs des deux systèmes SIC et SIP.
En effet, l'enrôlement permet de fournir à l'application 2 du mobile 1 de l'utilisateur U, une clé privée associée au compte de l'utilisateur dans le système de production SIP. Dans un exemple préféré de réalisation ; la phase d'enrôlement s'appuie sur l'utilisation de codes de chiffrement image QR-Code® pour transmettre les clés privées associées aux différents comptes de l'utilisateur U. L'utilisation de QR-code® pour transmettre des données chiffrées est décrite dans le brevet FR 1161430 publié sous le n° 2 984 047 le 14 juin 2013. Cependant d'autres mécanismes de transmission de secrets peuvent être utilisés comme, par exemple, une transmission non-optique par une connexion pour communication en champ proche c'est à dire une technologie de communication sans-fil à courte portée et haute fréquence telle que le Bluetooth ou le NFC (Near Field Communication).

L'utilisateur U dispose d'un mécanisme d'authentification dans le système de production SIP, lui permettant d'accéder au service d'enrôlement de l'application mobile 2 et du téléphone 1. Optionnellement le numéro IMEI ou un identifiant hardware du téléphone, est connu du système d'information SIP.

L'utilisateur accède à une application service d'enrôlement du système de production SIP après authentification.

L'application service d'enrôlement génère une paire de codes de chiffrement QRC1, QRC2 comprenant des données chiffrées Cph, Kpv. La donnée chiffrée Cph que doit sauvegarder l'application du téléphone mobile 2 est affichée sous forme de QR-Code® à scanner. Il peut s'agir également d'un affichage d'une chaîne de caractère à saisir. Le système de production SIP transmet ainsi à l'application du téléphone la clé privée chiffrée Cph contenant la clé kpv correspondant à la clé publique de chiffrement Kpu conservée par le système de production SIP.
- Soit un des QR-code® contient la clé secrète ks ainsi qu'éventuellement l'identifiant unique hardware ou numéro IMEI du téléphone. Alors, l'application 2 du terminal enregistre ks, éventuellement uniquement si le numéro IMEI du téléphone est le bon.
- Soit le système de production SIP ne transmet pas de clé secrète ks, l'application du téléphone mobile génère alors une clé ks aléatoire qui n'est pas transmise au système de production SIP ni au système d'information SIC. Cette solution est celle qui offre le plus de sécurité.

Pour pouvoir scanner le code de chiffrement QR-Code®, ou saisir manuellement la clé chiffrée Cph, l'application du téléphone mobile 2 demande dans un premier temps une authentification au système d'information SIC et peut alors effectuer les transferts d'informations (en l'occurrence le transfert des clés privées chiffrées) vers le système d'information SIC. Les étapes sont alors les suivantes :
- l'utilisateur U lance l'exécution de l'application mobile 2.
- L'application mobile 2 demande une authentification pour se connecter au système d'information SIC. Cela peut-être un mot de passe, un PIN code ou une authentification biométrique pour débloquer l'utilisation d'un certificat X509v3 du téléphone 1 ou tout autre moyen d'authentification disponible dans le SIC.
- L'utilisateur U peut alors, avec l'application 2, scanner ou saisir le code de chiffrement affiché par le service d'enrôlement du (SIP)
- L'application 2 utilise la connexion sécurisée 3 pour sauvegarder les clés obtenues auprès d'un service de stockage authentifié du système d'information SIC. Les clés peuvent être sur-chiffrées avec la clé ks qui réside dans le mobile 1 et qui peut dépendre de l'identifiant du téléphone (numéro IMEI ou « deviceID » hardware du téléphone), ou être complètement aléatoire et générée par la téléphone mobile 1, ou encore, comme décrit précédemment, transmises lors de la phase d'enrôlement dans le système de production SIP.
- L'utilisateur U confirme l'enrôlement de sa clé par la saisie d'un code résultat du décodage de la clé chiffrée Cph dans le service d'enrôlement du SIP. Ce code est affiché par l'application 2, ce code prouve que la procédure c'est correctement déroulée.
- Optionnellement l'utilisateur peut enrôler plusieurs clés qui peuvent être utilisées pour identifier plusieurs comptes pour différents accès aux applications du système de production(SIP).

### B) Phase d'authentification de l'utilisateur dans le SIP.

- l'utilisateur est connu du système de production SIP. Il a déjà réalisé la phase d'enrôlement de son application 2.
- l'utilisateur est connu du système d'information SIC, ledit utilisateur possède un identifiant ID et un mode d'authentification comme par exemple un mot de passe ou un certificat enregistré sur le système d'information SIC. L'application 2 de son téléphone mobile 1 est apte à mettre en œuvre ledit mode d'authentification lors de la connexion au système d'information SIC en utilisant le protocole sécurisé 3.
- Lorsqu'un utilisateur U veut se connecter au système de production SIP, il utilise le poste P, saisit son identifiant ID : nom d'utilisateur et mot de passe, le système de production SIP génère un défi QRCb qui se présente sous forme d'un code de chiffrement image QR-Code®. Le poste P ou application WEB présente un défi QRCb que seule l'application 2 du téléphone enrôlé peut résoudre. Ainsi, le défi QRCb ne peut être décodé que si l'utilisateur, après connexion au système d'information SIC avec son terminal 1, est authentifié par ledit système d'information SIC. Le système d'information SIC fournit dans ce cas, la clé privée chiffrée Cph enregistrée (contenant kpv) associée au compte utilisateur. Cette clé privée chiffrée Cph peut être déchiffrée par le terminal 1 de l'utilisateur U si ce terminal possède la clé secrète ks et le terminal 1 obtient alors un mot de passe MDP à usage unique donnant accès au système SIP.

L'application 2 du téléphone ne possède pas les clés privées kpv, cette application les obtient du système d'information SIC en mettant en œuvre le mécanisme d'authentification du système d'information SIC via la connexion 3. La connexion 3 est de type WebService ou REST sur protocole HTTPS. Cette connexion est sécurisée au moyen d'un certificat X509v3 du serveur S du système d'information SIC. L'application mobile 1 connait soit le certificat du serveur S du système d'information SIC soit le certificat de l'autorité de certification du certificat du système d'information SIC. La connexion 3 est avantageusement chiffrée et authentifiée mutuellement, par le certificat du système d'information SIC et par la méthode d'authentification de l'utilisateur auprès du système d'information SIC. Le serveur du système d'information SIC peut lui-même vérifier l'authentification de l'utilisateur auprès d'une base d'authentification LDAP (Lightweight Directory Access Protocol), RADIUS (Remote Authentication Dial-In User Service), Base de Données, ou s'appuyer sur un serveur d'authentification externe fournisseur d'identité SAML (Security assertion markup language), Kerberos, OAuth, OpenId ou tout autre protocole. La connexion 3 est réalisée sur le réseau GSM en 2G/3G/4G ou sur un réseau Wifi, même si de tels réseaux ne peuvent pas être considérés comme sûr, la sécurité de la connexion est assurée par le protocole et l'authentification mutuelle.

Au travers de la connexion 3, l'application mobile 2 obtient la clé nécessaire au déchiffrement du défi QRCb. Le système d'information SIC possède des zones d'enregistrements « conteneurs » pour les clés de chaque utilisateur, et ne les délivre que lorsque l'utilisateur U a réalisé une authentification correcte auprès du système d'information SIC en utilisant le protocole d'authentification supporté par l'application 2. Ainsi, seule l'application 2 du téléphone 1 enrôlé peut utiliser les clés privées kpv de l'utilisateur. Avantageusement, les clés peuvent être sur-chiffrées en utilisant la clé de chiffrement ks qui reste dans l'application 2 et qui dépend de l'identifiant hardware unique du téléphone mobile 1 ou générée aléatoirement par le téléphone mobile ou obtenue lors de la phase d'enrôlement dans le système de production SIP au moyen d'un QR-Code®.

Avantageusement, pour augmenter la sécurité, la clé secrète ks détenue par l'application 2 du téléphone mobile 1 de l'utilisateur, peut avoir été générée à partir d'une « pass-phrase» c'est-à-dire d'une phrase secrète, ou bien, peut être protégée par une «pass-phrase» que seule connait l'utilisateur U. Cette « pass-phrase » est demandée à l'utilisateur U avant l'initialisation des connexions sécurisées 3 vers le système d'information SIC ; cette « pass-phrase » a été demandée bien sûr par le téléphone dans le cas où la clé secrète ks est générée à partir de ladite « pass-phrase » et, bien sûr avant toute utilisation de la clé secrète ks.

Lorsque l'application 2 a obtenu la clé privée kpv associée au compte utilisateur du système de production SIP, l'application génère et affiche le mot de passe à usage unique MDP.

L'utilisateur doit alors saisir dans l'écran du poste P ou dans la bannière d'authentification de l'application Web ou du portail applicatif Web, le mot de passe à usage unique généré par l'application 2.

Le système de production SIP est apte à vérifier la réponse au défi QRCb et à autoriser ou non, l'utilisateur à se connecter aux applications ou poste de travail du système de production SIP.

Les utilisateurs du système de production SIP disposent d'un procédé d'authentification fort, contrôlé par le système d'information SIC et disjoint :
- L'utilisateur utilise son téléphone mobile 1 et l'application pour résoudre un défi et générer un mot de passe à usage unique.
- L'utilisateur doit utiliser un deuxième moyen d'authentification dans un système disjoint pour utiliser l'application du téléphone mobile.
- Le procédé d'authentification est réalisée par un moyen d'authentification multi-facteur de type « ce que je possède » ; le téléphone enrôlé, et « ce que je connais » ; l'authentification dans le système d'information de l'entreprise.
- Le système d'information de l'entreprise SIC contrôle qui s'authentifie et peut révoquer les moyens d'authentification de l'utilisateur sans lien avec le système d'information de production.
- L'application du téléphone mobile 2 ne possède pas les clés de génération des mots de passe à usage unique. Ainsi, le vol d'un téléphone ne compromet pas la sécurité du procédé d'authentification.
- Le système d'information SIC ne peut pas utiliser les clés de génération des mots de passe unique qui peuvent être sur-chiffrées avec une clé dépendante du téléphone. Les moyens de sauvegarde des clés dans le système d'information SIC peut être compromis sans que les clés soient utilisables pour accéder au système d'information de production SIP.
- Chaque authentification dans le système de production SIP génère en synchrone des événements d'audit dans le système d'information SIC.

### Exemple de réalisation pratique:

On entend par service, des applications (programmes d'ordinateurs) et des ressources aptes à mettre en œuvre le service.

L'utilisateur enrôle son téléphone mobile grâce à l'application 2 «QRentry® » développée par la Société Evidian enregistrée sur son téléphone mobile, au travers d'une série de QR-Code® affichés par une application service d'enrôlement authentifié (interface Web ou interface client lourd Windows)

L'application 2 QRentry® nécessite une authentification pour permettre aux utilisateurs de se connecter à un service de stockage des clés dans le système d'information SIC. Ce service de stockage est sécurisé grâce à l'utilisation d'un service de pilotage d'accès sur le Web « Web Access Manager », il s'agit d'un service Web de type REST (REpresentational State Transfer) qui s'appuie sur une base données pour sauvegarder et accéder aux clés chiffrées.

Les accès aux applications dans le système de production SIP sont protégés soit par le service Web Access Manager pour les applications Web, soit par Authentication Manager et E-SSO pour les applications client lourd. Dans les deux cas, un défi de type QR-Code® est affiché pour accéder aux applications du système de production dont l'accès est contrôlé.

L'application 2 QRentry® est capable de scanner les défis présenté sous la forme d'un QR-Code, de récupérer de façon en synchrone, les clés chiffrées du système d'information, et de générer un mot de passe à usage unique.

Les deux systèmes d'information SIC et de production SIP ne sont pas connectés ensemble.

## Revendications

1. Procédé (M) de contrôle d'accès à un système de production (SIP) d'un système informatique par un utilisateur identifié auprès dudit système de production (SIP), le système de production étant non connecté à un système d'information (SIC) dudit système informatique, le système d'information (SIC) comprenant des moyens d'authentification, le procédé étant **caractérisé en ce qu'**il comprend les étapes suivantes:
**A)** Une phase initiale d'enrôlement d'un utilisateur dans le système informatique de production (SIP) au moyen d'un terminal (1) comprenant:
- a) la fourniture au terminal de l'utilisateur d'une clé privée chiffrée (Cph) associée à chaque compte de l'utilisateur dans le système de production (SIP),
- b) la transmission par le terminal (1) de la clé privée chiffrée (Cph) contenant une clé privée (kpv) et l'enregistrement par le système d'information (SIC) de ladite clé privée chiffrée (Cph).
**B)** Puis, pour chaque demande d'accès au système de production (SIP) par l'utilisateur, au moyen d'un poste (P) connecté au système de production, une phase d'authentification par le système de production (SIP) comprenant:
- la récupération par le terminal (1) de l'utilisateur d'un code de chiffrement image (QRCb) affiché sur ledit poste (P), comprenant une donnée chiffrée (Cph) associée au compte de l'utilisateur et déchiffrable au moyen de la clé privée (kpv) associée et enregistrée sous forme chiffrée sur le système d'information (SIC),
- la connexion du terminal (1) au système informatique d'information (SIC) et l'authentification de l'utilisateur par ledit système d'information (SIC),
- la transmission par ledit système (SIC) au terminal (1) de l'utilisateur, de la clé privée chiffrée (Cph)) enregistrée pour le compte utilisateur,
- le déchiffrement par le terminal (1) de la clé privée chiffrée (Cph) avec une clé secrète (ks) afin d'obtenir la clé privée (kpv) permettant de déchiffrer le code de chiffrement image récupéré par le terminal (1) et obtenir le mot de passe (MDP) autorisant l'accès au compte utilisateur du système de production.

2. Procédé de contrôle d'accès à un système de production (SIP) selon la revendication 1, **caractérisé en ce que** :
- la fourniture au terminal (1) de l'utilisateur d'une clé privée chiffrée associée à chaque compte de l'utilisateur dans le système de production (SIP) comporte :
- une authentification de l'utilisateur par le système de production,
- la génération par ledit système de production (SIP) d'un premier code de chiffrement image (QCR1) contenant une donnée chiffrée (Cph) avec une clé publique (Kpu) et d'un deuxième code de chiffrement image (QCR2)contenant la clé privée (Kpv),
- et la récupération dudit code par le terminal (1) ;
- le décodage du code de chiffrement (QCR2) pour obtenir la clé privée (kpv),
- le déchiffrement de la donnée chiffrée avec la clé privée (Kpv).

3. Procédé de contrôle d'accès à un système de production (SIP) selon la revendication 1, **caractérisé en ce que** la phase A) comprend en outre les étapes de:
- chiffrement par le terminal de ladite la clé privée (kpv) par une clé secrète (ks),
- connexion au système d'information (SIC) et authentification par le système d'information (SIC) dudit terminal.

4. Procédé de contrôle d'accès à un système de production (SIP) selon la revendication 1, caractérisé en ce la clé secrète de chiffrement (ks) est enregistrée dans le terminal et est obtenue à partir d'un identifiant unique du terminal (1) ou lors de la phase A) ou générée aléatoirement par le terminal ou générée par le terminal à partir d'une phrase secrète « pass- phrase » communiquée par l'utilisateur.

5. Procédé de contrôle d'accès à un système de production (SIP) selon la revendication 1, **caractérisé en ce que** la phase B) comprend l'étape initiale d'entrée d'une donnée d'identification ID de l'utilisateur sur un poste (P) connecté au système de production (SIP

6. Procédé de contrôle d'accès à un système de production (SIP) d'un système informatique selon la revendication 1, **caractérisé en ce que** l'enrôlement du terminal (1) d'un utilisateur au système informatique de production (SIP) comprend une étape initiale:
- d'authentification de l'utilisateur au moyen d'un identifiant (ID) enregistré dans le système de production (SIP),

7. Procédé de contrôle d'accès à un système de production (SIP) d'un système informatique selon la revendication 1, **caractérisé en ce que** la connexion au système d'information (SIC) et l'authentification par le système d'information (SIC) dudit terminal comprend :
Lors de l'étape d'enrôlement,
- L'identification de l'utilisateur du terminal par un identifiant (ID) et l'enregistrement de cet identifiant sur le système d'information (SIC),
Puis lors de connexions ultérieures :
- La vérification de l'identifiant (ID) reçu par le système d'information (SIC) et l'identifiant (ID) enregistré pour cet utilisateur.

8. Procédé de contrôle d'accès à un système de production (SIP) d'un système informatique selon la revendication 1, **caractérisé en ce que** la connexion au système d'information (SIC) par le terminal de l'utilisateur et l'authentification par ledit système d'information (SIC) sont réalisées par un protocole sécurisé (3) mis en œuvre par une application (2) enregistrée sur le terminal.

9. Procédé de contrôle d'accès à un système de production (SIP) d'un système informatique selon la revendication 1, **caractérisé en ce que** le terminal (1) est un terminal équipé de moyens optiques de capture d'image et/ou d'une connexion pour communication sans-fil à courte portée et haute fréquence. Avantageusement, une telle communication sans fil courte portée est réalisée par Bluetooth ou NFC (Near Field Communication), tel qu'un téléphone mobile ou une tablette portable.

10. Procédé de contrôle d'accès à un système de production (SIP) d'un système informatique selon la revendication 1, **caractérisé en ce que** les clés privées chiffrées associés à chaque compte de l'utilisateur dans le système de production (SIP) sont sous forme de codes de chiffrement image (QRC1 et QRC2) composés:
D'un QR-Code ; ou
D'un datamatrix ;
D'un code barre.

11. Procédé de contrôle d'accès à un système de production (SIP) d'un système informatique selon la revendication 1, **caractérisé en ce que** la connexion au poste (P) de l'utilisateur comprend :
- une connexion via ledit poste au système de production (SIP) ou à une application WEB ou à un portail WEB du système de production,
- la saisie par l'utilisateur de l'identifiant (ID) sur le poste (P),
- la génération et l'affichage du code de chiffrement (QRC2) sur l'écran dudit poste (P) ou dans une bannière d'authentification de l'application WEB ou du portail applicatif.

12. Procédé de contrôle d'accès à un système de production (SIP) d'un système informatique selon la revendication 1, **caractérisé en ce que** la connexion au système d'information (SIC) comprend une connexion de type WEB Service ou REST sur un protocole HTTPS.

13. Procédé de contrôle d'accès à un système de production (SIP) d'un système informatique selon la revendication 8, **caractérisé en ce que** ladite connexion est sécurisée au moyen d'un certificat du serveur d'authentification du système d'information, le terminal de l'utilisateur ayant ledit certificat ou ayant un certificat de l'autorité de certification du certificat.

14. Terminal (1) d'un utilisateur utilisé pour la mise en œuvre du procédé de contrôle d'accès à un système de production (SIP) d'un système informatique par un utilisateur identifié auprès dudit système de production (SIP) selon la revendication 1, ledit terminal (1) d'utilisateur étant apte à :
- A) permettre la phase initiale d'enrôlement de l'utilisateur dans le système informatique de production (SIP) et à cette fin à :
- a) recevoir d'une clé privée chiffrée (Cph) associée à chaque compte de l'utilisateur dans le système de production (SIP),
- b) transmettre la clé privée chiffrée (Cph) contenant une clé privée (kpv) pour enregistrement par le système d'information (SIC) de ladite clé privée chiffrée (Cph).
- B) Puis, lors de la phase d'authentification par le système de production (SIP), pour chaque demande d'accès au système de production (SIP) par l'utilisateur au moyen d'un poste (P) connecté au système de production, à :
- récupérer un code de chiffrement image (QRCb) affiché sur ledit poste (P), comprenant une donnée chiffrée (Cph) associée au compte de l'utilisateur et déchiffrable au moyen de la clé privée (kpv) associée et enregistrée sous forme chiffrée sur le système d'information (SIC),
- se connecter au système informatique d'information (SIC) pour authentification de l'utilisateur par ledit système d'information (SIC),
- recevoir la clé privée chiffrée (Cph)) enregistrée pour le compte utilisateur, transmise par ledit système (SIC),
- déchiffrer la clé privée chiffrée (Cph) avec une clé secrète (ks) afin d'obtenir la clé privée (kpv) permettant de déchiffrer le code de chiffrement image récupéré et obtenir le mot de passe (MDP) autorisant l'accès au compte utilisateur du système de production.

15. Terminal (1)selon la revendication 14, **caractérisé en ce qu'**il comporte une application (2) pilotée par le processeur (PR), apte à mettre en œuvre un mode d'authentification avec un système d'information (SIC) via une liaison sécurisée, les identifications (ID) des utilisateurs et le mode d'authentification (MP ou CERT) étant enregistrés sur le système d'information (SIC).

16. Terminal (1) selon la revendication 14, **caractérisé en ce que** l'application (2) est apte à déchiffrer la clé privée chiffrée (Cph) fournie par le système d'information (SIC), lorsque cette clé privée chiffrée correspond à la clé chiffrée avec la clé secrète (ks) associée au compte utilisateur qu'il possède.

17. Système pour le contrôle d'accès à un système de production (SIP) non connecté à un système d'information (SIC) d'un système informatique, **caractérisé en ce qu'**il comprend :
- un terminal selon les revendications 14 à 16,
- **en ce que** le système de production (SIP) comporte en mémoire des identifiants des comptes utilisateurs, et les clés publiques (kpu) et privées (kpv) associées à chaque utilisateur et est apte à chiffrer une clé privée (kpv) au moyen de la clé publique (kpu) associée et à générer un code de chiffrement image (QRC2) comprenant ladite clé privée
- et **en ce que** le système d'information (SIC) comporte un serveur (S) comportant une base d'authentification ou est relié à un serveur d'authentification.

## Patentansprüche

1. Verfahren (M) der Kontrolle des Zugriffs auf ein Produktionssystem (SIP) eines EDV-Systems durch einen Benutzer, der an dem Produktionssystem (SIP) identifiziert ist, wobei das Produktionssystem nicht mit einem Informationssystem (SIC) des EDV-Systems verbunden ist, wobei das Informationssystem (SIC) Authentifizierungsmittel umfasst, wobei das Verfahren **dadurch gekennzeichnet ist, dass** es die folgenden Schritte umfasst:
A) Eine erste Phase der Registrierung eines Benutzers in dem Produktionssystem (SIP) des EDV-Systems mithilfe eines Endgerätes (1), umfassend:
- a) Bereitstellen am Endgerät des Benutzers eines verschlüsselten privaten Schlüssels (Cph), der jedem Konto des Benutzers in dem Produktionssystem (SIP) zugeordnet ist,
- b) Übertragen von dem Endgerät (1) des verschlüsselten privaten Schlüssels (Cph), der einen privaten Schlüssel (kpv) enthält, und Speichern durch das Informationssystems (SIC) dieses verschlüsselten privaten Schlüssels (Cph);
B) Anschließend, für jede Anforderung des Zugriffs auf das Produktionssystem (SIP) durch den Benutzer über eine Station (P), die mit dem Produktionssystem verbunden ist, eine Phase der Authentifizierung durch das Produktionssystem (SIP), umfassend:
- Abrufen durch das Endgerät (1) des Benutzers eines Bildverschlüsselungscodes (QRCb), der auf der Station (P) angezeigt wird, umfassend verschlüsselte Daten (Cph), die dem Benutzerkonto zugeordnet sind und mithilfe des zugehörigen privaten Schlüssels (kpv) entschlüsselt werden können, der in verschlüsselter Form im Informationssystem (SIC) gespeichert ist,
- Verbinden des Endgerätes (1) mit dem Informationssystem (SIC) des EDV-Systems und Authentifizieren des Benutzers durch das Informationssystem (SIC),
- Übertragen durch das System (SIC) zum Endgerät (1) des Benutzers des verschlüsselten privaten Schlüssels (Cph), der für das Benutzerkonto gespeichert ist,
- Entschlüsseln durch das Endgerät (1) des verschlüsselten privaten Schlüssels (Cph) mit einem geheimen Schlüssel (ks), um den privaten Schlüssel (kpv) zu erhalten, mit dem der Bildverschlüsselungscode, der durch das Endgerät (1) abgerufen wurde, entschlüsselt werden kann, und das Passwort (MDP) zu erhalten, das den Zugriff auf das Benutzerkonto des Produktionssystems erlaubt.

2. Verfahren zur Kontrolle des Zugriffs auf ein Produktionssystem (SIP) nach Anspruch 1, **dadurch gekennzeichnet, dass**:
- das Bereitstellen am Endgerät (1) des Benutzers eines verschlüsselten privaten Schlüssels, der jedem Konto des Benutzers in dem Produktionssystem (SIP) zugeordnet ist, umfasst:
- Authentifizieren des Benutzers durch das Produktionssystem,
- Erzeugen durch das Produktionssystem (SIP) eines ersten Bildverschlüsselungscodes (QCR1), der verschlüsselte Daten (Cph) mit einem öffentlichen Schlüssel (Kpu) enthält, und eines zweiten Bildverschlüsselungscodes (QCR2), der den privaten Schlüssel (Kpv) enthält, und
- Abrufen des Codes durch das Endgerät (1);
- Decodieren des Verschlüsselungscodes (QCR2), um den privaten Schlüssel (kpv) zu erhalten,
- Entschlüsseln der verschlüsselten Daten unter Verwendung des privaten Schlüssels (Kpv).

3. Verfahren zur Kontrolle des Zugriffs auf ein Produktionssystem (SIP) nach Anspruch 1, **dadurch gekennzeichnet, dass** die Phase A) weiter die Schritte umfasst:
- Verschlüsseln durch das Endgerät des privaten Schlüssels (kpv) durch einen geheimen Schlüssel (ks),
- Verbinden mit dem Informationssystem (SIC) und Authentifizieren des Endgerätes durch das Informationssystem (SIC).

4. Verfahren zur Kontrolle des Zugriffs auf ein Produktionssystem (SIP) nach Anspruch 1, **dadurch gekennzeichnet, dass** der geheime Verschlüsselungsschlüssel (ks) im Endgerät gespeichert ist und ausgehend von einer eindeutigen Kennung des Endgerätes (1) oder in der Phase A) erhalten wird oder durch das Endgerät zufällig erzeugt wird oder durch das Endgerät ausgehend von einer geheimen Phrase (Passphrase) erzeugt wird, die von dem Benutzer mitgeteilt wird.

5. Verfahren zur Kontrolle des Zugriffs auf ein Produktionssystem (SIP) nach Anspruch 1, **dadurch gekennzeichnet, dass** die Phase B) den ersten Schritt des Eingebens von Identifikationsdaten ID des Benutzers an einer Station (P) umfasst, die mit dem Produktionssystem (SIP) verbunden ist.

6. Verfahren zur Kontrolle des Zugriffs auf ein Produktionssystem (SIP) eines EDV-Systems nach Anspruch 1, **dadurch gekennzeichnet, dass** die Registrierung des Endgeräts (1) eines Benutzers bei dem Produktionssystem (SIP) des EDV-Systems einen ersten Schritt umfasst:
- der Authentifizierung des Benutzers mithilfe einer Kennung (ID), die in dem Produktionssystem (SIP) gespeichert ist.

7. Verfahren zur Kontrolle des Zugriffs auf ein Produktionssystem (SIP) eines EDV-Systems nach Anspruch 1, **dadurch gekennzeichnet, dass** die Verbindung mit dem Informationssystem (SIC) und die Authentifizierung durch das Informationssystem (SIC) des Endgeräts umfassen:
Während des Schrittes des Registrierens:
- Identifizieren des Benutzers des Endgerätes durch eine Kennung (ID) und Speichern dieser Kennung in dem Informationssystem (SIC),
Dann bei späteren Verbindungen:
- Überprüfen der Kennung (ID), die durch das Informationssystem (SIC) empfangen wird, und der Kennung (ID), die für diesen Benutzer gespeichert ist.

8. Verfahren zur Kontrolle des Zugriffs auf ein Produktionssystem (SIP) eines EDV-Systems nach Anspruch 1, **dadurch gekennzeichnet, dass** die Verbindung mit dem Informationssystem (SIC) durch das Endgerät des Benutzers und die Authentifizierung durch das Informationssystem (SIC) über ein gesichertes Protokoll (3) erfolgen, das durch eine Anwendung (2) implementiert wird, die auf dem Endgerät gespeichert ist.

9. Verfahren zur Kontrolle des Zugriffs auf ein Produktionssystem (SIP) eines EDV-Systems nach Anspruch 1, **dadurch gekennzeichnet, dass** das Endgerät (1) ein Endgerät mit optischen Bildaufnahmemitteln und/oder einer Verbindung für die drahtlose Hochfrequenz-Kurzstreckenkommunikation ist, wobei eine derartige drahtlose Kurzstreckenkommunikation vorteilhafterweise durch Bluetooth oder NFC (Near Field Communication) erfolgt, wie beispielsweise über ein Mobiltelefon oder ein Tablet.

10. Verfahren zur Kontrolle des Zugriffs auf ein Produktionssystem (SIP) eines EDV-Systems nach Anspruch 1, **dadurch gekennzeichnet, dass** die jedem Konto des Benutzers in dem Produktionssystem (SIP) zugeordneten verschlüsselten privaten Schlüssel in Form von Bildverschlüsselungscodes (QRC1 und QRC2) vorliegen, bestehend aus:
einem QR-Code; oder
einer Datenmatrix;
einem Barcode.

11. Verfahren zur Kontrolle des Zugriffs auf ein Produktionssystem (SIP) eines EDV-Systems nach Anspruch 1, **dadurch gekennzeichnet, dass** die Verbindung mit der Station (P) des Benutzers umfasst:
- Verbinden über die Station mit dem Produktionssystem (SIP) oder mit einer WEB-Anwendung oder mit einem WEB-Portal des Produktionssystems,
- Eingeben der Kennung (ID) durch den Benutzer an der Station (P),
- Erzeugen und Anzeigen des Verschlüsselungscodes (QRC2) auf dem Bildschirm der Station (P) oder in einem Authentifizierungsbanner der WEB-Anwendung oder des Anwendungsportals.

12. Verfahren zur Kontrolle des Zugriffs auf ein Produktionssystem (SIP) eines EDV-Systems nach Anspruch 1, **dadurch gekennzeichnet, dass** die Verbindung mit dem Informationssystem (SIC) eine Verbindung vom Typ WEB Service oder REST über ein HTTPS-Protokoll umfasst.

13. Verfahren zur Kontrolle des Zugriffs auf ein Produktionssystem (SIP) eines EDV-Systems nach Anspruch 8, **dadurch gekennzeichnet, dass** die Verbindung mithilfe eines Zertifikats des Authentifizierungsservers des Informationssystems gesichert wird, wobei das Endgerät des Benutzers das Zertifikat oder ein Zertifikat der Zertifizierungsstelle des Zertifikats besitzt.

14. Endgerät (1) eines Benutzers, das für die Ausführung des Verfahrens zur Kontrolle des Zugriffs auf ein Produktionssystem (SIP) eines EDV-Systems durch einen Benutzer verwendet wird, der an dem Produktionssystem (SIP) nach Anspruch 1 identifiziert ist, wobei das Benutzerendgerät (1) in der Lage ist:
- A) die erste Phase der Registrierung des Benutzers in dem Produktionssystem (SIP) des EDV-Systems zu gestatten und zu diesem Zweck:
- a) einen verschlüsselten privaten Schlüssel (Cph) zu empfangen, der jedem Konto des Benutzers in dem Produktionssystem (SIP) zugeordnet ist,
- b) den verschlüsselten privaten Schlüssel (Cph), der einen privaten Schlüssel (kpv) enthält, zur Speicherung dieses verschlüsselten privaten Schlüssels (Cph) durch das Informationssystems (SIC) zu übertragen.
- B) Anschließend während der Authentifizierungsphase durch das Produktionssystem (SIP) für jede Anforderung des Zugriffs auf das Produktionssystem (SIP) durch den Benutzer über eine Station (P), die mit dem Produktionssystem verbunden ist:
- einen Bildverschlüsselungscodes (QRCb) abzurufen, der auf der Station (P) angezeigt wird, umfassend verschlüsselte Daten (Cph), die dem Konto des Benutzers zugeordnet sind und mithilfe des zugehörigen privaten Schlüssels (kpv) entschlüsselt werden können, der in verschlüsselter Form in dem Informationssystem (SIC) gespeichert ist,
- sich zur Authentifizierung des Benutzers durch das Informationssystem (SIC) mit dem Informationssystem (SIC) des EDV-Systems zu verbinden,
- den verschlüsselten privaten Schlüssel (Cph), der für das Benutzerkonto gespeichert ist, zu empfangen, der durch das System (SIC) übertragen wird,
- den verschlüsselten privaten Schlüssel (Cph) mit einem geheimen Schlüssel (ks) zu entschlüsseln, um den privaten Schlüssel (kpv) zu erhalten, mit dem der abgerufene Bildverschlüsselungscode entschlüsselt werden kann, und das Passwort (MDP) zu erhalten, das den Zugriff auf das Benutzerkonto des Produktionssystems erlaubt.

15. Endgerät (1) nach Anspruch 14, **dadurch gekennzeichnet, dass** es eine Anwendung (2) umfasst, die durch den Prozessor (PR) gesteuert wird und über ein sichere Verbindung einen Authentifizierungsmodus mit einem Informationssystem (SIC) implementieren kann, wobei die Kennungen (ID) der Benutzer und der Authentifizierungsmodus (MP oder CERT) in dem Informationssystem (SIC) gespeichert sind.

16. Endgerät (1) nach Anspruch 14, **dadurch gekennzeichnet, dass** die Anwendung (2) den verschlüsselten privaten Schlüssel (Cph), der von dem Informationssystem (SIC) bereitgestellt wird, entschlüsseln kann, wenn dieser verschlüsselte private Schlüssel dem mit dem geheimen Schlüssel (ks) verschlüsselten Schlüssel entspricht, der dem Benutzerkonto zugeordnet ist, das er besitzt.

17. System zur Kontrolle des Zugriffs auf ein Produktionssystem (SIP), das nicht mit einem Informationssystem (SIC) eines EDV-Systems verbunden ist, **dadurch gekennzeichnet,**
**dass** es umfasst:
- ein Endgerät nach den Ansprüchen 14 bis 16,
- **dass** das Produktionssystem (SIP) Kennungen der Benutzerkonten und die öffentlichen (kpu) und privaten Schlüssel (kpv) im Speicher hat, die jedem Benutzer zugeordnet sind, und in der Lage ist, einen privaten Schlüssel (kpv) mithilfe des zugeordneten öffentlichen Schlüssels (kpu) zu verschlüsseln und einen Bildverschlüsselungscode (QRC2) zu erzeugen, der diesen privaten Schlüssel umfasst
- und **dass** das Informationssystem (SIC) einen Server (S) aufweist, der eine Authentifizierungsdatenbank aufweist oder mit einem Authentifizierungs-Server verbunden ist.

## Claims

1. A method (M) for controlling access to a production system (SIP) of a computer system by a user identified with said production system (SIP), the production system being not connected to an information system (SIC) of said computer system, the information system (SIC) comprising authentication means, the method being **characterized in that** it comprises the following steps:
A) An initial phase of enrolling a user in the production computer system (SIP) by means of a terminal (1) comprising:
- a) the supply to the user's terminal of an encrypted private key (Cph) associated with each user's account in the production system (SIP),
- b) the transmission by the terminal (1) of the encrypted private key (Cph) containing a private key (kpv) and the storing by the information system (SIC) of said encrypted private key (Cph).
B) Then, for each request for access to the production system (SIP) by the user, by means of a station (P) connected to the production system, a phase of authentication by the production system (SIP) comprising:
- the retrieval by the user's terminal (1) of an image encryption code (QRCb) displayed on said station (P), comprising an encrypted data (Cph) associated with the user's account and decipherable by means of the associated private key (kpv) and stored in an encrypted form on the information system (SIC),
- the connection of the terminal (1) to the information computer system (SIC) and the authentication of the user by said information system (SIC),
- the transmission by said system (SIC) to the user's terminal (1), of the encrypted private key (Cph) stored for the user account,
- the decryption by the terminal (1) of the private key encrypted (Cph) with a secret key (ks) in order to obtain the private key (kpv) allowing the decryption of the image encryption code retrieved by the terminal (1) and obtain the password (MDP) authorizing access to the user account of the production system.

2. The method for controlling access to a production system (SIP) according to claim 1, **characterized in that**:
- the supply to the user's terminal (1) of an encrypted private key associated with each user's account in the production system (SIP) includes:
- an authentication of the user by the production system,
- the generation by said production system (SIP) of a first image encryption code (QCR1) containing a data encrypted (Cph) with a public key (Kpu) and of a second image encryption code (QCR2) containing the key private (Kpv),
- and the retrieval of said code by the terminal (1);
- the decoding of the encryption code (QCR2) to obtain the private key (kpv),
- the decryption of the data encrypted with the private key (Kpv).

3. The method for controlling access to a production system (SIP) according to claim 1, **characterized in that** the phase A) further comprises the steps of:
- encryption by the terminal of said private key (kpv) by a secret key (ks),
- connection to the information system (SIC) and authentication by the information system (SIC) of said terminal.

4. The method for controlling access to a production system (SIP) according to claim 1, **characterized in that** the secret encryption key (ks) is stored in the terminal and is obtained from a unique identifier of the terminal (1) or during the phase A) or randomly generated by the terminal or generated by the terminal from a secret passphrase "pass-phrase" communicated by the user.

5. The method for controlling access to a production system (SIP) according to claim 1, **characterized in that** the phase B) comprises the initial step of entering an identification data ID of the user on a station (P) connected to the production system (SIP).

6. The method for controlling access to a production system (SIP) of a computer system according to claim 1, **characterized in that** the enrollment of the terminal (1) of a user to the production computer system (SIP) comprises an initial step of:
- authentication of the user by means of an identifier (ID) stored in the production system (SIP).

7. The method for controlling access to a production system (SIP) of a computer system according to claim 1, **characterized in that** the connection to the information system (SIC) and the authentication by the information system (SIC) of said terminal comprises:
During the enrollment step,
- The identification of the user of the terminal by an identifier (ID) and the storing of this identifier on the information system (SIC),
Then, during subsequent connections:
- The verification of the identifier (ID) received by the information system (SIC) and of the identifier (ID) stored for this user.

8. The method for controlling access to a production system (SIP) of a computer system according to claim 1, **characterized in that** the connection to the information system (SIC) by the user's terminal and the authentication by said information system (SIC) are carried out by a secure protocol (3) implemented by an application (2) stored on the terminal.

9. The method for controlling access to a production system (SIP) of a computer system according to claim 1, **characterized in that** the terminal (1) is a terminal equipped with image capture optical means and/or with a connection for short-range and high-frequency wireless communication. Advantageously, such short-range wireless communication is performed by Bluetooth or NFC (Near Field Communication), such as a mobile phone or a portable tablet.

10. The method for controlling access to a production system (SIP) of a computer system according to claim 1, **characterized in that** the encrypted private keys associated with each user's account in the production system (SIP) are in the form of image encryption codes (QRC1 and QRC2) composed:
Of a QR-Code; or
Of a datamatrix;
Of a bar code.

11. The method for controlling access to a production system (SIP) of a computer system according to claim 1, **characterized in that** the connection to the user's station (P) comprises:
- a connection via said station to the production system (SIP) or to a WEB application or to a WEB portal of the production system,
- the entry by the user of the identifier (ID) on the station (P),
- the generation and the display of the encryption code (QRC2) on the screen of said station (P) or in an authentication banner of the WEB application or of the application portal.

12. The method for controlling access to a production system (SIP) of a computer system according to claim 1, **characterized in that** the connection to the information system (SIC) comprises a connection of the WEB Service or REST type on an HTTPS protocol.

13. The method for controlling access to a production system (SIP) of a computer system according to claim 8, **characterized in that** said connection is secured by means of a certificate from the authentication server of the information system, the user's terminal having said certificate or having a certificate from the certificate certification authority.

14. A user's terminal (1) used for the implementation of the method for controlling access to a production system (SIP) of a computer system by a user identified with said production system (SIP) according to claim 1, said user terminal (1) being able to:
- A) allow the initial phase of enrollment of the user in the production computer system (SIP) and for this purpose:
- a) receive an encrypted private key (Cph) associated with each user's account in the production system (SIP),
- b) transmit the encrypted private key (Cph) containing a private key (kpv) for the storing by the information system (SIC) of said encrypted private key (Cph).
- B) Then, during the authentication phase by the production system (SIP), for each request for access to the production system (SIP) by the user by means of a station (P) connected to the production system:
- retrieve an image encryption code (QRCb) displayed on said station (P), comprising encrypted data (Cph) associated with the user's account and decipherable by means of the associated private key (kpv) and stored in an encrypted form on the information system (SIC),
- connect to the information computer system (SIC) for authentication of the user by said information system (SIC),
- receive the encrypted private key (Cph) stored for the user's account, transmitted by said system (SIC),
- decrypt the encrypted private key (Cph) with a secret key (ks) in order to obtain the private key (kpv) allowing to decrypt the retrieved image encryption code and obtain the password (MDP) authorizing access to the user's account of the production system.

15. The terminal (1) according to claim 14, **characterized in that** it includes an application (2) controlled by the processor (PR), capable of implementing an authentication mode with an information system (SIC) via a secure link, the identifier (ID) of the users and the authentication mode (MP or CERT) being stored on the information system (SIC).

16. The terminal (1) according to claim 14, **characterized in that** the application (2) is capable of decrypting the encrypted private key (Cph) provided by the information system (SIC), when this encrypted private key corresponds to the key encrypted with the secret key (ks) associated with the user's account he has.

17. A system for controlling access to a production system (SIP) not connected to an information system (SIC) of a computer system, **characterized in that** it comprises:
- a terminal according to claims 14 to 16,
- **in that** the production system (SIP) includes, in memory storage, identifiers of the user accounts, and the public (kpu) and private (kpv) keys associated with each user and is capable of encrypting a private key (kpv) by means of the associated public key (kpu) and of generating an image encryption code (QRC2) comprising said private key
- and **in that** the information system (SIC) includes a server (S) including an authentication base or is linked to an authentication server.
